# EUROPEAN PATENT APPLICATION

(11) **EP 4 852 271 A1**
(43) Date of publication of application: **09.12.2026**
(21) Application number: 24921497.4
(22) Date of filing: 08.10.2024
(51) Int. Cl.: H02J 3/48, H02J 3/28, H02J 3/24

(54) **POWER GRID FREQUENCY CONTROL METHOD AND APPARATUS, AND DEVICE AND STORAGE MEDIUM**

(30) Priority: 30.01.2024 CN 202410130169
(71) Applicant: Sungrow Power Supply (Nanjing) Co., Ltd, Nanjing, Jiangsu 210012 (CN)
(72) Inventor: HUANG, Tiangang, Nanjing, Jiangsu 210012 (CN); DONG, Chen, Nanjing, Jiangsu 210012 (CN); XIA, Yanhui, Nanjing, Jiangsu 210012 (CN)
(74) Representative: Zacco Norway AS
(86) International application number: PCT/CN2024/123337
(87) International publication number: WO 2025/161473

(57) **Abstract**

Disclosed in the present application are a power grid frequency control method and apparatus, and a device and a storage medium. The method comprises: on the basis of a frequency change rate after the frequency of a power grid exceeds a limit and a first preset expected change rate, sending a first active power adjustment instruction to an energy storage device; determining a target time on the basis of a predicted adjustment duration and an instruction delay duration, and determining a second active power adjustment value on the basis of a second preset expected change rate; and sending a second active power adjustment instruction to the energy storage device at the target time. In the technical solution in the embodiments of the present application, a sending time of an instruction is distinguished from an execution time of the energy storage device, and by means of estimating a sending time of the second active power adjustment instruction, the frequency of the power grid can be kept close to a preset frequency, such as 50 Hz, when the energy storage device executes the second active power adjustment instruction. Thus, a power grid frequency control strategy has higher engineering application value, and the effect of power grid frequency control is optimized.

## Description

This application claims the priority to Chinese Patent Application No. 202410130169.2, titled "POWER GRID FREQUENCY CONTROL METHOD AND APPARATUS, AND DEVICE AND STORAGE MEDIUM", filed on January 30, 2024 with the China National Intellectual Property Administration, which is incorporated herein by reference in its entirety.

### FIELD

The present disclosure relates to the field of frequency regulation for power systems, and in particular to a method and an apparatus for regulating a grid frequency, a device and a storage medium.

### BACKGROUND

Conventionally, power systems typically operate at a rated power frequency. A mismatch between a power generated from a power grid and a load power may lead to a change of a grid frequency. When a fault occurs in a power system, the frequency of the power system may deviate from the rated power frequency, leading to frequency instability. To maintain the frequency close to the rated power frequency, frequency regulation is to be regulated. The power system provided with an energy storage device may regulate the frequency utilizing the energy storage device, thereby recovering the frequency of the power system to a normal state.

The conventional frequency regulation methods involve transmitting an emergency control instruction to the energy storage device to implement the frequency regulation. However, a delay between transmission of the control instruction and execution of a switching operation by the energy storage device is not taken into account in the conventional frequency regulation methods, resulting in poor frequency regulation effect.

### SUMMARY

A method and an apparatus for regulating a grid frequency, a device and a storage medium are provided according to the present disclosure, to address the issue of poor frequency regulation effect caused by delays in instruction validation.

In a first aspect, a method for regulating a grid frequency is provided according to the present disclosure. The method includes: transmitting, in response to a grid frequency falling outside a preset range, a first active power regulation instruction to an energy storage device based on a change rate of the grid frequency and a first preset change rate, where the first active power regulation instruction includes a first active power regulation value; determining a target time point based on a prediction regulation duration and an instruction delay duration, and determining a second active power regulation value based on a second preset change rate, where the prediction regulation duration refers to a predicted duration for the grid frequency to reach a preset frequency after the energy storage device executes the first active power regulation instruction; and transmitting a second active power regulation instruction to the energy storage device at the target time point, where the second active power regulation instruction includes the second active power regulation value.

In a second aspect, an apparatus for regulating a grid frequency is provided according to the present disclosure. The apparatus includes a first instruction transmitting module, a power regulation value determination module and a second instruction transmitting module. The first instruction transmitting module is configured to transmit, in response to a grid frequency falling outside a preset range, a first active power regulation instruction to an energy storage device based on a change rate of the grid frequency and a first preset change rate, where the first active power regulation instruction includes a first active power regulation value. The power regulation value determination module is configured to determine a target time point based on a prediction regulation duration and an instruction delay duration, and determine a second active power regulation value based on a second preset change rate, where the prediction regulation duration refers to a predicted duration for the grid frequency to reach a preset frequency after the energy storage device executes the first active power regulation instruction. The second instruction transmitting module is configured to transmit a second active power regulation instruction to the energy storage device at the target time point, where the second active power regulation instruction includes the second active power regulation value.

In a third aspect, an electronic device is provided according to the present disclosure. The electronic device includes at least one processor and a memory. The memory is in communication connection with the at least one processor, where the memory stores a computer program executable by the at least one processor, and the computer program, when being executed by the at least one processor, causes the at least one processor to perform the method for regulating a grid frequency according to the above first aspect.

In a fourth aspect, a computer-readable storage medium is provided according to the present disclosure. The computer-readable storage medium stores computer instructions, and the computer instructions, when being executed by a processor, cause the processor to perform the method for regulating a grid frequency according to the above first aspect.

In the solutions for regulating a grid frequency according to the present disclosure, in response to a grid frequency falling outside a preset range, a first active power regulation instruction is transmitted to an energy storage device based on a change rate of the grid frequency and a first preset change rate, where the first active power regulation instruction includes a first active power regulation value. A target time point is determined based on a prediction regulation duration and an instruction delay duration, and a second active power regulation value is determined based on a second preset change rate. The prediction regulation duration refers to a predicted duration for the grid frequency to reach the preset frequency after the energy storage device executes the first active power regulation instruction. A second active power regulation instruction is transmitted to the energy storage device at the target time point, where the second active power regulation instruction includes the second active power regulation value. With the above technical solutions, a time point of transmitting an instruction and a time point of the energy storage device executing the instruction are distinguished from each other, making the control strategy for a grid frequency in this solution more practical for engineering applications. The time point of transmitting the second active power regulation instruction is predicted, so that the energy storage device, when executing the second active power regulation instruction, maintains the grid frequency close to a preset frequency, such as 50Hz, thereby optimizing the effect of grid frequency control.

It should be understood that the above descriptions are not intended to identify keys or important features of the present disclosure or to limit the scope of the present disclosure. Other features of the present disclosure are to be easily understood through the following specification.

### BRIEF DESCRIPTION OF THE DRAWINGS

To illustrate the technical solutions in embodiments of the present disclosure more clearly, the drawings referred for describing the embodiments are briefly described below. Apparently, the drawings in the following description merely show some embodiments of the present disclosure, and those skilled in the art may obtain other drawings based on these drawings without any creative effort.
FIG. 1 is a flowchart of a method for regulating a grid frequency according to a first embodiment of the present disclosure;
FIG. 2 is a flowchart of a method for regulating a grid frequency according to a second embodiment of the present disclosure;
FIG. 3 is a schematic structural diagram of an apparatus for regulating a grid frequency according to a third embodiment of the present disclosure; and
FIG. 4 is a schematic structural diagram of an electronic device according to a fourth embodiment of the present disclosure.

### DETAILED DESCRIPTION

Hereinafter technical solutions of the embodiments of the present disclosure are described clearly and completely in conjunction with the drawings of the embodiments of the present disclosure to enable those skilled in the art to better understand these solutions. Apparently, the embodiments described are only some, rather than all, embodiments of the present disclosure. Based on the embodiments of the present disclosure, all other embodiments obtained by those skilled in the art without making any creative work fall within the protection scope of the present disclosure.

It should be noted that the terms "first", "second", and the like, in the description, claims, and the drawings of the present disclosure are intended for distinguishing similar objects rather than to indicating a specific sequence or order. It should be understood that the terms used in this way are interchangeable under appropriate circumstances such that the embodiments of the present disclosure described herein can be implemented in sequences other than those illustrated or described herein. In the description of the present disclosure, the term "multiple" indicates two or more unless otherwise specified. "And/or" describes an association relationship for associated objects and represents that three relationships may exist. For example, A and/or B may represent the following three cases: only A exists, both A and B exist, and only B exists. The character "/" generally indicates an "or" relationship between the objects before and after. Moreover, the terms "include (comprise)", "have/provided with" and any other variants thereof are intended to cover a non-exclusive inclusion. For example, a process, method, system, product, or device that includes a list of steps or units is not necessarily limited to the expressly listed steps or units, but may include other steps or units not expressly listed or inherent to the process, method, product, or device.

### First Embodiment

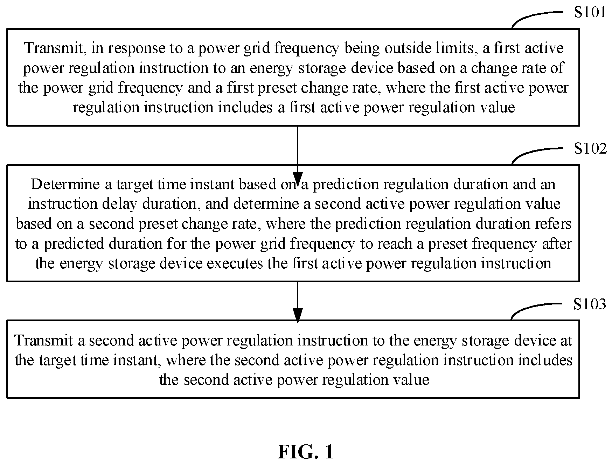

FIG. 1 is a flowchart of a method for regulating a grid frequency according to a first embodiment of the present disclosure. This embodiment may be applicable to a situation where a grid frequency is to be regulated. The method may be performed by an apparatus for regulating a grid frequency. The apparatus for regulating a grid frequency may be implemented in the form of software and/or hardware, and may be arranged in an electronic device. The electronic device may include two or more physical entities or a single physical entity.

As shown in FIG. 1, the method for regulating a grid frequency according to the first embodiment of the present disclosure includes the following steps S101 to S103.

In S101, in response to a grid frequency falling outside a preset range, a first active power regulation instruction is transmitted to an energy storage device based on a change rate of the grid frequency and a first preset change rate, where the first active power regulation instruction includes a first active power regulation value.

In the present embodiment, it may be monitored whether the grid frequency is outside a preset range, and the change rate of the grid frequency may be determined in response to the grid frequency falling outside the preset range. The first active power regulation value may be determined based on the change rate of the grid frequency and the first preset change rate of the grid frequency, and the first active power regulation instruction including the first active power regulation value is transmitted to the energy storage device, to cause the grid frequency to recover to a preset frequency, such as a rated frequency, as soon as possible. For example, a predetermined calculation is performed on the change rate of the grid frequency and the first preset change rate to calculate a power disturbance generated by the energy storage device at a node of the power grid, and the power disturbance may be determined as the first active power regulation value. An upper limit of the grid frequency may be 50.03Hz, and a lower limit of the grid frequency may be 49.97Hz. The first preset change rate may be understood as a preset expected change rate of the grid frequency, which may be determined based on a response of the energy storage device to a historical instruction.

In S102, a target time point is determined based on a prediction regulation duration and an instruction delay duration, and a second active power regulation value is determined based on a second preset change rate. The prediction regulation duration refers to a predicted duration for the grid frequency to reach the preset frequency after the energy storage device executes the first active power regulation instruction.

In the present embodiment, the instruction delay duration may be understood as a duration from a time point of transmitting the active power regulation instruction to a time point of executing the instruction by the energy storage device. To enable the grid frequency to approach the preset frequency (such as the rated frequency of 50Hz) when the energy storage device executes a second active power regulation instruction, a duration for the grid frequency to reach the preset frequency after the energy storage device executes the first active power regulation instruction may be first predicted. A time point of transmitting the second active power regulation instruction, that is, a target time point may be determined based on the predicted duration and the instruction delay duration. For example, in response to the predicted duration being greater than the instruction delay duration, it indicates that a waiting period is required at least before transmitting the second active power regulation instruction, and in this case, the target time point may be a sum of the prediction regulation duration and a time point of transmitting the first active power regulation instruction. In response to the predicted duration being less than the instruction delay duration, it indicates that the duration for the grid frequency to reach the preset frequency is less than the instruction delay duration of the second active power regulation instruction. Therefore, the second active power regulation instruction is to be transmitted before the energy storage device executes the first active power regulation instruction. In this case, the target time point may be a sum of a difference between the instruction delay duration and the prediction regulation duration (which is less than zero) and a time point of executing the first active power regulation instruction. The second active power regulation value may be determined based on a second preset change rate. For example, after the energy storage device executes the first active power regulation instruction, a predetermined calculation is performed on the change rate of the grid frequency and the second preset change rate, to calculate a power disturbance generated by the energy storage device at the node of the power grid, and the power disturbance may be determined as the second active power regulation value. The second preset change rate may also be understood as a preset expected change rate of the grid frequency.

In S103, the second active power regulation instruction is transmitted to the energy storage device at the target time point, where the second active power regulation instruction includes the second active power regulation value.

In the present embodiment, the second active power regulation instruction may be transmitted to the energy storage device at the target time point, to enable the grid frequency to stabilize at the preset frequency.

In the method for regulating a grid frequency according to the embodiment of the present disclosure, in response to a grid frequency falling outside a preset range, a first active power regulation instruction is transmitted to an energy storage device based on a change rate of the grid frequency and a first preset change rate, where the first active power regulation instruction includes a first active power regulation value. A target time point is determined based on a prediction regulation duration and an instruction delay duration, and a second active power regulation value is determined based on a second preset change rate. The prediction regulation duration refers to a predicted duration for the grid frequency to reach the preset frequency after the energy storage device executes the first active power regulation instruction. The second active power regulation instruction is transmitted to the energy storage device at the target time point, where the second active power regulation instruction includes the second active power regulation value. According to the technical solution of the embodiment of the present disclosure, a time point of transmitting an instruction and a time point of the energy storage device executing the instruction are distinguished from each other, making the control strategy for the grid frequency in this solution more practical for engineering applications. The time point of transmitting the second active power regulation instruction is predicted, so that the energy storage device, when executing the second active power regulation instruction, maintains the grid frequency close to a preset frequency, such as 50Hz, thereby optimizing the control effect of the grid frequency.

In an embodiment, before transmitting, in response the a grid frequency falling outside a preset range, the first active power regulation instruction to the energy storage device based on the change rate of the grid frequency and the first preset change rate, the method further includes: determining, for each of power generation units, a target energy storage device associated with the power generation unit from multiple energy storage devices based on an electrical distance from the power generation unit to each of the multiple energy storage devices. The transmitting, in response to the grid frequency falling outside the preset range, the first active power regulation instruction to the energy storage device based on the change rate of the grid frequency and the first preset change rate includes: transmitting, in response to the grid frequency falling outside the preset range, for each of the power generation units, the first active power regulation instruction to the target energy storage device associated with the power generation unit based on the change rate of the grid frequency and the first preset change rate of the power generation unit. The advantage of this configuration is that, based on the electrical distance from the power generation unit to each of the energy storage devices, an associated target energy storage device may be reasonably assigned to the power generation unit, thereby improving efficiency of frequency regulation.

In an embodiment, for each of the power generation units, the electrical distance from the power generation unit to each energy storage device may be calculated, and the energy storage device corresponding to the shortest electrical distance may be determined as the energy storage device associated with the power generation unit, that is, the target energy storage device. Each power generation unit may be associated with at least one energy storage device. When the grid frequency falls outside the preset range, the first active power regulation instruction may be transmitted to the target energy storage device associated with the power generation unit.

In an embodiment, the transmitting, in response to the grid frequency falling outside the preset range, for each of the power generation units, the first active power regulation instruction to the target energy storage device associated with the power generation unit based on the change rate of the grid frequency and the first preset change rate of the power generation unit includes: determining, for each of the power generation units, the first active power regulation value corresponding to the power generation unit based on the change rate of the grid frequency and the first preset change rate of the power generation unit, where the first preset change rate is an expected change rate after the energy storage device executes the first active power regulation instruction; determining, in response to the target energy storage device being associated with multiple power generation units, a maximum among first active power regulation values corresponding to the multiple power generation units as a target first active power regulation value; and transmitting a target first active power regulation instruction to the target energy storage device associated with each of the power generation units, where the target first active power regulation instruction includes the target first active power regulation value. The advantage of this configuration is that, the maximum among the first active power regulation values corresponding to the multiple power generation units is determined as the target first active power regulation value, a rising trend or falling trend after the grid frequency is outside the preset range can be rapidly reversed.

In an embodiment, a time point when an active power is regulated for the first time for each target energy storage device may be a time point when the frequency exceeds the limit. In response to the target energy storage device being associated with multiple power generation units, the active power regulation amount for the first time (i.e., the target first active power regulation value) may be the maximum among the first active power regulation values corresponding to the multiple power generation units, thereby rapidly reversing the rising or falling trend after the grid frequency is outside the preset range.

In an embodiment, before transmitting the second active power regulation instruction to the energy storage device at the target time point, the method further includes: determining, in response to the target energy storage device being associated with multiple power generation units, a minimum among second active power regulation values corresponding to the multiple power generation units as a target second active power regulation value. The transmitting the second active power regulation instruction to the energy storage device at the target time point includes: transmitting a target second active power regulation instruction to the target energy storage device associated with each of the power generation units at the target time point, where the target second active power regulation instruction includes the target second active power regulation value. The advantage of this configuration is that, the minimum among the second active power regulation values corresponding to the multiple power generation units is determined as the target second active power regulation value, so that severe negative effects of frequency regulation, such as frequency overshoot, can be avoided, thereby achieving rapid recovery of an actual power grid when the power system includes multiple power generation units and multiple energy storage devices under frequency disturbance conditions .

In an embodiment, a time point when an active power is regulated for the second time for each target energy storage device may be a time point when frequencies of most of the power generation units associated with the energy storage device recover to the preset frequency. In response to the target energy storage device being associated with multiple power generation units, a minimum among second active power regulation values corresponding to the multiple power generation units may be determined as the target second active power regulation value, where the power generation units may be synchronous power generation units.

In an embodiment, before transmitting, in response to a grid frequency falling outside a preset range, the first active power regulation instruction to the energy storage device based on the change rate of the grid frequency and the first preset change rate, the method further includes: determining a failure risk based on a failure probability and failure economic costs of each of all nodes in the power grid, and ranking the nodes based on the failure risks to obtain a node order; and arranging energy storage devices based on target nodes in the node order, where the target nodes are nodes ranked at a predetermined position in the node order, and each of electrical distances among the energy storage devices is greater than a predetermined threshold. The advantage of this configuration is that, the energy storage devices are reasonably arranged, which avoids redundancy of the energy storage devices and reduces economic costs while ensuring that the frequency can be rapidly recovered by all the energy storage devices absorbing or injecting active power in the event of frequency disturbances.

In an embodiment, the failure risk may be determined as a product of the failure probability and the failure economic cost resulted from the failure. All nodes in the power grid may be ranked based on the failure risks. For example, the nodes are ranked in descending order of the failure risks. The nodes ranked at a predetermined position in the node order may be determined as target nodes. For example, nodes ranked in the top 30% of the node order may be determined as the target nodes. The energy storage devices may be arranged near the target nodes. The actual number of the energy storage devices may be determined based on a predetermined number of the energy storage devices and a predetermined coefficient. For example, when it is expected that no more than 10 energy storage devices are to be arranged in an actual power grid, the actual number of the energy storage devices is determined based on a ratio of 1:1.5, that is, the actual number of the energy storage devices is determined as 10×1.5=15. Subsequently, the electrical distances among the energy storage devices are determined. For a pair of energy storage devices with an electrical distance being less than or equal to the predetermined threshold, one energy storage device in the pair may be removed, and the other energy storage device is retained.

### Second Embodiment

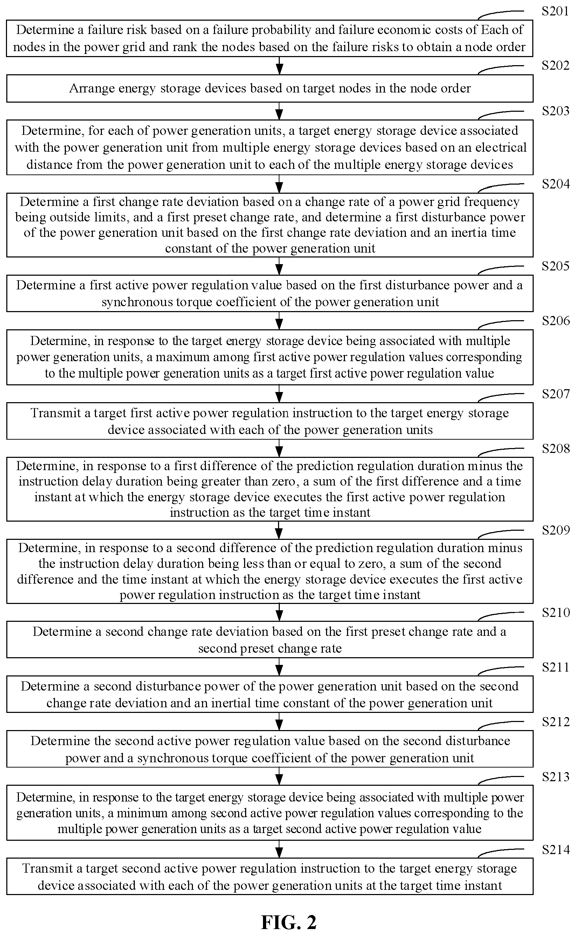

FIG. 2 is a flowchart of a method for regulating a grid frequency according to a second embodiment of the present disclosure. In the present embodiment, the above technical solutions are further optimized, to provide an implementation of the method for regulating a grid frequency.

In an embodiment, the transmitting, in response to a grid frequency falling outside a preset range, the first active power regulation instruction to the energy storage device based on the change rate of the grid frequency and the first preset change rate includes: determining a first change rate deviation based on the change rate of the grid frequency and the first preset change rate, and determining a first disturbance power of the power generation unit based on the first change rate deviation and an inertia time constant of the power generation unit; determining the first active power regulation value based on the first disturbance power and a synchronous torque coefficient of the power generation unit; and transmitting the first active power regulation instruction including the first active power regulation value to the energy storage device. The advantage of this configuration is that, a change in mechanical power caused by inertial response is taken into account, and an active power to be regulated for the first time at an energy storage end can be accurately determined based on the inertial time constant and the synchronous torque coefficient of the power generation unit.

In an embodiment, the determining the target time point based on the prediction regulation duration and the instruction delay duration includes: determining, in response to a first difference of the prediction regulation duration minus the instruction delay duration being greater than zero, a sum of the first difference and a time point when the energy storage device executes the first active power regulation instruction as the target time point, where the time point when the energy storage device executes the first active power regulation instruction is a sum of a time point when the first active power regulation instruction is transmitted and the instruction delay duration; and determining, in response to a second difference of the prediction regulation duration minus the instruction delay duration being less than or equal to zero, a sum of the second difference and the time point when the energy storage device executes the first active power regulation instruction as the target time point. The advantage of this configuration is that, a time point of transmitting an instruction for the second time may be accurately determined based on the difference of the prediction regulation duration minus the instruction delay duration.

In an embodiment, the determining the second active power regulation value based on the second preset change rate includes: determining a second change rate deviation based on the first preset change rate and the second preset change rate; determining a second disturbance power of a power generation unit based on the second change rate deviation and an inertial time constant of the power generation unit; and determining the second active power regulation value based on the second disturbance power and a synchronous torque coefficient of the power generation unit. The advantage of this configuration is that, the change in the mechanical power caused by the inertial response is taken into account, the second preset change rate is preset, and an active power to be regulated for the second time at the energy storage end can be accurately determined based on the inertial time constant of the power generation unit and the second preset change rate.

As shown in FIG. 2, the method for regulating a grid frequency according to the second embodiment of the present disclosure includes the following steps S201 to S214.

In S201, a failure risk is determined based on a failure probability and failure economic costs of each of all nodes in a power grid, and the nodes are ranked based on the failure risks to obtain a node order.

In S202, energy storage devices are arranged based on target nodes in the node order.

In S203, for each of power generation units, a target energy storage device associated with the power generation unit is determined from multiple energy storage devices based on an electrical distance from the power generation unit to each of the multiple energy storage devices.

In S204, when the grid frequency falls outside a preset range, a first change rate deviation is determined based on a change rate of the grid frequency and a first preset change rate, and a first disturbance power of the power generation unit is determined based on the first change rate deviation and an inertia time constant of the power generation unit.

In S205, a first active power regulation value is determined based on the first disturbance power and a synchronous torque coefficient of the power generation unit.

For example, the power generation unit is a synchronous power generation unit, and the first disturbance power Δ*P_{e.syn.i}* is determined according to the following equations: $\begin{matrix}Δ {P}_{e . syn . i} = Δ {P}_{m . syn . i} - {T}_{J . i} Δ {a}_{i} \\ \approx Δ {P}_{m . syn . i . in} - 2 {πT}_{J . i} \left(\frac{df ′}{dt}-\frac{df}{dt}\right) \\ = - \left({T}_{J . i}+2{πT}_{J . i}\right) \left(\frac{df ′}{dt}-\frac{df}{dt}\right)\end{matrix}$
where *T_{J.i}* represents the inertia time constant of the synchronous power generation unit i, $\frac{df ′}{dt}$ represents the first preset change rate, Δ*P_{e.syn.i}* represents the first disturbance power of the power generation unit, and a difference between $\frac{df ′}{dt}$ and $\frac{df}{dt}$ represents the first change rate deviation. In the above equation, Δ*P_{e.syn.i}* represents a predicted active power change in the synchronous power generation unit i after the first active power regulation instruction is executed. Based on impulse power distribution, and node voltage changes and network conductance are neglected, the energy storage device at a node k is to generate a power disturbance equal to the first active power regulation value, in order to induce an active power change of Δ*P_{e.syn.i}* in the synchronous power generation unit i. The first active power regulation value Δ*P*_{*es*.*k*} is determined according to the following equations: $Δ {P}_{e . syn . i} = - \frac{{R}_{ik}}{{\sum }_{i = 1}^{N} {R}_{ik}} Δ {P}_{es . k}$ $Δ {P}_{es . k} = - \frac{{\sum }_{i = 1}^{N} {R}_{ik}}{{R}_{ik}} Δ {P}_{e . syn . i}$
where *Rᵢₖ = UₖEᵢBₗᵢ* cos *δ*_{*ik*0}, and *Rᵢₖ* represents a synchronous torque coefficient of the synchronous power generation unit i and the node k; *Uₖ* represents a bus voltage of the node k; *Eᵢ* represents a transient internal potential of the synchronous power generation unit i; *Bᵢₖ* represents a mutual susceptance between the synchronous power generation unit i and the node k; *δ*_{*ik*0} represents an initial angle difference between the synchronous power generation unit i and the node k prior to the disturbance; and N represents a total number of synchronous power generation units in the system.

In S206, in response to the target energy storage device being associated with multiple power generation units, a maximum among the first active power regulation values corresponding to the multiple power generation units is determined as a target first active power regulation value.

In S207, a target first active power regulation instruction is transmitted to the target energy storage device associated with each of the power generation units.

In S208, in response to a first difference of the prediction regulation duration minus the instruction delay duration being greater than zero, a sum of the first difference and a time point when the energy storage device executes the first active power regulation instruction is determined as the target time point.

The time point when the energy storage device executes the first active power regulation instruction is a sum of a time point when the first active power regulation instruction is transmitted and the instruction delay duration.

For example, the grid frequency f is below a preset lower limit of 49.97Hz, the preset frequency is 50Hz, the prediction regulation duration t1 satisfies: $f + td ∗ \frac{df ′}{dt} + \frac{df ′}{dt} ∗ t 1 = 50$ where, td represents the instruction delay duration of the first active power regulation instruction. In response to the (first) difference of the prediction regulation duration minus the instruction delay duration being greater than zero, the sum of the first difference and the time point when the energy storage device executes the first active power regulation instruction is determined as the target time point.

In S209, in response to a second difference of the prediction regulation duration minus the instruction delay duration being less than or equal to zero, a sum of the second difference and the time point when the energy storage device executes the first active power regulation instruction is determined as the target time point.

For example, as described above, in response to the (second) difference of the prediction regulation duration minus the instruction delay duration being less than or equal to zero, the sum of the second difference and the time point when the energy storage device executes the first active power regulation instruction is determined as the target time point.

In S210, a second change rate deviation is determined based on the first preset change rate and a second preset change rate.

In S211, a second disturbance power of the power generation unit is determined based on the second change rate deviation and an inertial time constant of the power generation unit.

For example, the power generation unit is a synchronous power generation unit, and the second disturbance power ${ΔP}_{e . syn . i}^{′}$ is determined according to the following equations: $\begin{matrix}Δ {P}_{e . syn . i}^{′} = Δ {P}_{m . syn . i}^{′} - 2 {πT}_{J . i} \left(\frac{df "}{dt}-\frac{df ′}{dt}\right) \\ \approx Δ {P}_{m . syn . i . in}^{′} - 2 {πT}_{J . i} \left(\frac{df "}{dt}-\frac{df ′}{dt}\right) \\ = \left(2{πT}_{J . i}+{T}_{J . i}\right) \frac{df ′}{dt}\end{matrix}$ where $\frac{df "}{dt}$ represents the second preset change rate, whose value may be zero; a difference of $\frac{df "}{dt}$ minus $\frac{df ′}{dt}$ represents the second change rate deviation.

In S212, the second active power regulation value is determined based on the second disturbance power and the synchronous torque coefficient of the power generation unit.

For example, the second active power regulation value $Δ {P}_{es . k}^{′}$ is determined according to the following equation: ${ΔP}_{es . k}^{′} = - \frac{{\sum }_{i = 1}^{N} {R}_{ik}}{{R}_{ik}} {ΔP}_{e . syn . i}^{′}$ where *Rᵢₖ* represents the synchronous torque coefficient between the power generation unit i and the node k.

In S213, in response to the target energy storage device being associated with multiple power generation units, a minimum among second active power regulation values corresponding to the multiple power generation units is determined as a target second active power regulation value.

In S214, a target second active power regulation instruction is transmitted to the target energy storage device associated with each of the power generation units at the target time point.

In the method for regulating a grid frequency according to the embodiments of the present disclosure, a change in mechanical power caused by inertial response is taken into account, an active power to be regulated for a first time at an energy storage end is accurately determined based on the inertial time constant and the synchronous torque coefficient of the power generation unit. Furthermore, the second preset change rate is preset, and an active power to be regulated for a second time at the energy storage end can be accurately determined based on the inertial time constant of the power generation unit and the second preset change rate. Finally, the time point of transmitting the instruction for the second time is accurately determined based on the difference of the prediction regulation duration and the instruction delay duration.

### Third Embodiment

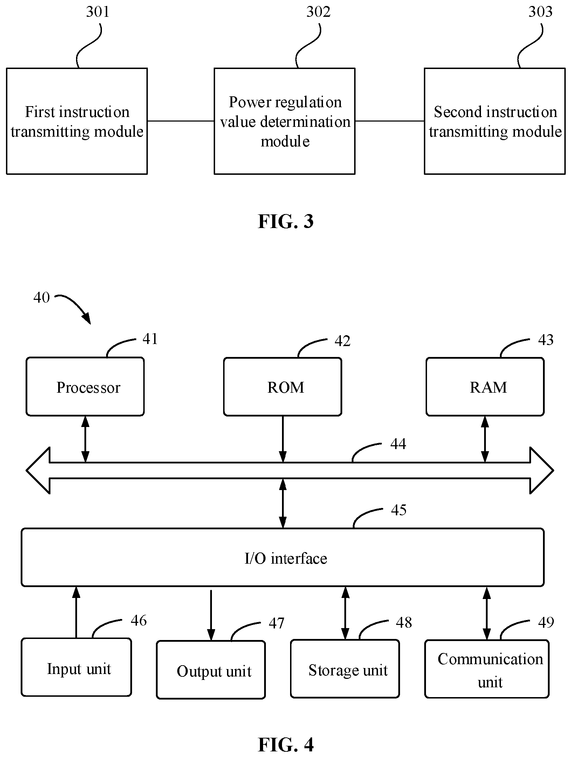

FIG. 3 is a schematic structural diagram of an apparatus for regulating a grid frequency according to a third embodiment of the present disclosure. As shown in FIG. 3, the apparatus includes a first instruction transmitting module 301, a power regulation value determination module 302, and a second instruction transmitting module 303.

The first instruction transmitting module is configured to transmit, in response to a grid frequency falling outside a preset range, a first active power regulation instruction to an energy storage device based on a change rate of the grid frequency and a first preset change rate, where the first active power regulation instruction includes a first active power regulation value.

The power regulation value determination module is configured to determine a target time point based on a prediction regulation duration and an instruction delay duration, and determine a second active power regulation value based on a second preset change rate. The prediction regulation duration refers to a predicted duration for the grid frequency to reach a preset frequency after the energy storage device executes the first active power regulation instruction.

The second instruction transmitting module is configured to transmit a second active power regulation instruction to the energy storage device at the target time point, where the second active power regulation instruction includes the second active power regulation value.

In the apparatus for regulating a grid frequency according to the embodiment of the present disclosure, a time point of transmitting an instruction and a time point of the energy storage device executing the instruction are distinguished from each other, making the control strategy for the grid frequency in this solution more practical for engineering applications. The time point of transmitting the second active power regulation instruction is predicted, so that the energy storage device, when executing the second active power regulation instruction, maintains the grid frequency close to a preset frequency, such as 50Hz, thereby optimizing the control effect of the grid frequency.

In an embodiment, the first instruction transmitting module includes a first disturbance power determination unit, a first power regulation value determination unit and a first instruction transmitting unit.

The first disturbance power determination unit is configured to determine a first change rate deviation based on the change rate of the grid frequency and the first preset change rate, and determine a first disturbance power of a power generation unit based on the first change rate deviation and an inertia time constant of the power generation unit.

The first power regulation value determination unit is configured to determine the first active power regulation value based on the first disturbance power and a synchronous torque coefficient of the power generation unit.

The first instruction transmitting unit is configured to transmit the first active power regulation instruction including the first active power regulation value to the energy storage device.

In an embodiment, the power regulation value determination module includes a first target time point determination unit and a second target time point determination unit.

The first target time point determination unit is configured to determine, in response to a first difference of the prediction regulation duration minus the instruction delay duration being greater than zero, a sum of the first difference and a time point when the energy storage device executes the first active power regulation instruction as the target time point, where the time point when the energy storage device executes the first active power regulation instruction is a sum of a time point when the first active power regulation instruction is transmitted and the instruction delay duration.

The second target time point determination unit is configured to determine, in response to a second difference of the prediction regulation duration minus the instruction delay duration being less than or equal to zero, a sum of the second difference and the time point when the energy storage device executes the first active power regulation instruction as the target time point.

In an embodiment, the power regulation value determination module includes a change rate deviation determination unit, a second disturbance power determination unit and a second power regulation value determination unit.

The change rate deviation determination unit is configured to determine a second change rate deviation based on the first preset change rate and the second preset change rate.

The second disturbance power determination unit is configured to determine a second disturbance power of a power generation unit based on the second change rate deviation and an inertial time constant of the power generation unit.

The second power regulation value determination unit is configured to determine the second active power regulation value based on the second disturbance power and a synchronous torque coefficient of the power generation unit.

In an embodiment, the apparatus further includes a target energy storage device determination module.

The target energy storage device determination module is configured to determine, for each of power generation units, a target energy storage device associated with the power generation unit from multiple energy storage devices based on an electrical distance from the power generation unit to each of the multiple energy storage devices before the first active power regulation instruction is transmitted to the energy storage device based on the change rate of the grid frequency and the first preset change rate.

In an embodiment, the first instruction transmitting module is further configured to transmit, in response to the grid frequency falling outside a preset range, for each of the power generation units, the first active power regulation instruction to the target energy storage device associated with the power generation unit based on the change rate of the grid frequency and the first preset change rate of the power generation unit.

In an embodiment, the transmitting, in response to the grid frequency falling outside a preset range, for each of the power generation units, the first active power regulation instruction to the target energy storage device associated with the power generation unit based on the change rate of the grid frequency and the first preset change rate of the power generation unit includes: determining, for each of the power generation units, the first active power regulation value corresponding to the power generation unit based on the change rate of the grid frequency and the first preset change rate of the power generation unit, where the first preset change rate is an expected change rate after the energy storage device executes the first active power regulation instruction; determining, in response to the target energy storage device being associated with multiple power generation units, a maximum among first active power regulation values corresponding to the multiple power generation units as a target first active power regulation value; and transmitting a target first active power regulation instruction to the target energy storage device associated with each of the power generation units, where the target first active power regulation instruction includes the target first active power regulation value.

In an embodiment, the apparatus further includes a target power regulation value determination module.

The target power regulation value determination module is configured to determine, in response to the target energy storage device being associated with multiple power generation units, a minimum among second active power regulation values corresponding to the multiple power generation units as a target second active power regulation value before the second active power regulation instruction is transmitted to the energy storage device at the target time point.

In an embodiment, the second instruction transmitting module is further configured to transmit a target second active power regulation instruction to the target energy storage device associated with each of the power generation units at the target time point, where the target second active power regulation instruction includes the target second active power regulation value.

In an embodiment, the apparatus further includes a failure risk determination module and an energy storage device configuration module.

The failure risk determination module is configured to determine a failure risk based on a failure probability and failure economic costs of each of all nodes in the power grid, and rank the nodes based on the failure risks to obtain a node order, before the first active power regulation instruction is transmitted, in response to a grid frequency falling outside a preset range, to the energy storage device based on the change rate of the grid frequency and the first preset change rate.

The energy storage device configuration module is configured to arrange energy storage devices based on target nodes in the node order, where the target nodes are nodes ranked at predetermined positions in the node order, and each of electrical distances among the energy storage devices is greater than a predetermined threshold.

The apparatus for regulating a grid frequency according to the embodiment of the present disclosure may perform the method for regulating a grid frequency according to any one of the embodiments of the present disclosure, and has functional modules and beneficial effects corresponding to the method.

### Fourth Embodiment

FIG. 4 is a schematic structural diagram of an electronic device 40 applicable to implement embodiments of the present disclosure. The electronic device is intended to represent various forms of digital computers, such as a laptop computer, a desktop computer, a working platform, a personal digital assistant, a server, a blade server, a mainframe computer, and other suitable computers. The electronic device may also represent various forms of mobile apparatuses, such as a personal digital processing unit, a cellular phone, a smart phone, a wearable device (such as a helmet, glasses and a watch) and other similar computing apparatuses. The components shown herein, their connections and relationships, and their functions are only examples, and are not intended to limit the implementation of the present disclosure described and/or claimed herein.

As shown in FIG. 4, the electronic device 40 includes at least one processor 41, and a memory, such as a read-only memory (ROM) 42 and a random access memory (RAM) 43, which is communicatively connected with the at least one processor 41. The memory is configured to store a computer program that is executable by the at least one processor. The processor 41 may perform various proper actions and processes based on a computer program stored in the read-only memory (ROM) 42 or a computer program loaded into the random access memory (RAM) 43 from a storage unit 48. The RAM 43 is further configured to store various programs and data required by the electronic device 40 to perform an operation. The processor 41, the ROM 42 and the RAM 43 are connected to each other through a bus 44. An input/output (I/O) interface 45 is connected to the bus 44.

Multiple components in the electronic device 40 are connected to the I/O interface 45, including an input unit 46, such as a keyboard and a mouse; an output unit 47, such as various types of displays and speakers; a storage unit 48, such as a magnetic disk and an optical disk; and a communication unit 49, such as a network card, a modem and a wireless communication transceiver. The communication unit 49 allows the electronic device 40 to exchange information/data with other devices through a computer network such as the Internet and/or various telecommunication networks.

The processor 41 may be various general-purpose and/or special-purpose processing components with processing and computing capabilities. Some examples of the processor 41 include, but are not limited to, a central processing unit (CPU), a graphics processing unit (GPU), various specialized artificial intelligence (AI) computing chips, various processors running machine learning model algorithms, a digital signal processor (DSP), and any suitable processor, controller, microcontroller, etc. The processor 41 performs the methods and processes described above, for example, the method for regulating a grid frequency.

In some embodiments, the method for regulating a grid frequency may be implemented as a computer program, which is tangibly included in a computer-readable storage medium, for example, the storage unit 48. In some embodiments, part or all of the computer program may be loaded and/or installed on the electronic device 40 via the ROM 42 and/or the communication unit 49. When the computer program is loaded into the RAM 43 and is executed by the processor 41, one or more steps of the method for regulating a grid frequency described above may be performed. Alternatively, in other embodiments, the processor 41 is configured to perform the method for regulating a grid frequency by any other appropriate means (for example, by virtue of firmware).

Various embodiments of the systems and techniques described above herein may be implemented in digital electronic circuitry, integrated circuitry, field programmable gate arrays (FPGA), application specific integrated circuits (ASIC), application specific standard products (ASSP), system-on-a-chip (SOC), complex programmable logic devices (CPLD), computer hardware, firmware, software, and/or their combinations. These various embodiments may include being implemented in one or more computer programs that may be executed and/or interpreted on a programmable system including at least one programmable processor, which may be a special-purpose or general-purpose programmable processor and may receive data and instructions from a storage system, at least one input apparatus, and at least one output apparatus, and transmit data and instructions to the storage system, the at least one input apparatus, and the at least one output apparatus.

The computer program for implementing the method of the present disclosure may be written in any combination of one or more programming languages. These computer programs may be provided to a processor of a general-purpose computer, a special-purpose computer or other programmable data processing apparatus, such that the computer programs, when executed by the processor, cause the functions/operations specified in the flowcharts and/or block diagrams to be implemented. A computer program may be completely executed on a machine, partially executed on a machine, partially executed on a machine as a separate software package and partially executed on a remote machine or completely executed on a remote machine or server.

The computer device described above may be applicable to implement the method for regulating a grid frequency according to any of the above embodiments, and has functions and beneficial effects corresponding to the method.

### Fifth Embodiment

In the context of the present disclosure, a computer-readable storage medium may be a tangible medium, where computer-executable instructions, when being executed by a computer processor, implement a method for regulating a grid frequency, the method includes:
transmitting, in response to a grid frequency falling outside a preset range, a first active power regulation instruction to an energy storage device based on a change rate of the grid frequency and a first preset change rate, where the first active power regulation instruction includes a first active power regulation value;
determining a target time point based on a prediction regulation duration and an instruction delay duration, and determining a second active power regulation value based on a second preset change rate, where the prediction regulation duration refers to a predicted duration for the grid frequency to reach a preset frequency after the energy storage device executes the first active power regulation instruction; and
transmitting a second active power regulation instruction to the energy storage device at the target time point, where the second active power regulation instruction includes the second active power regulation value.

In the context of the present disclosure, the computer-readable storage medium may be a tangible medium, which may include or store a computer program for use by or in combination with an instruction execution system, apparatus or device. The computer-readable storage medium may include, but is not limited to, an electronic, magnetic, optical, electromagnetic, infrared, or semiconductor system, apparatus or device, or any proper combination thereof. Alternatively, the computer-readable storage medium may be a machine-readable signal medium. More specific examples of the machine-readable storage medium may include, one or more wire-based electrical connections, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device or any suitable combination thereof.

The computer device described above may be applicable to implement the method for regulating a grid frequency according to any of the above embodiments, and has functions and beneficial effects corresponding to the method.

It should be noted that, in the above embodiments of the apparatus for regulating a grid frequency, units and modules are classified according to only logic function. The classification method is not limited, as long as corresponding functions can be realized. Names of the functional units are only used to distinguish from each other, and are not intended to limit the scope of the present disclosure.

It should be noted that the merely preferred embodiments and the technical principles of the present disclosure are described above. Those skilled in the art should understand that the present disclosure is not limited to the embodiments described herein. Those skilled in the art can made various changes, modifications and substitution without departing from the scope of the present disclosure. Therefore, although the present disclosure has been described in detail through the above embodiments, the present disclosure is not limited to the above embodiments, and may include more other equivalent embodiments without departing from the concept of the present disclosure. The scope of the present disclosure is determined by the scope of the appended claims.

## Claims

1. A method for regulating a grid frequency, **characterized in** comprising:
transmitting , in response to a grid frequency falling outside a preset range, a first active power regulation instruction to an energy storage device based on a change rate of the grid frequency and a first preset change rate, wherein the first active power regulation instruction comprises a first active power regulation value;
determining a target time point based on a prediction regulation duration and an instruction delay duration, and determining a second active power regulation value based on a second preset change rate, wherein the prediction regulation duration refers to a predicted duration for the grid frequency to reach a preset frequency after the energy storage device executes the first active power regulation instruction; and
transmitting a second active power regulation instruction to the energy storage device at the target time point, wherein the second active power regulation instruction comprises the second active power regulation value.

2. The method according to claim 1, wherein the transmitting , in response to a grid frequency falling outside a preset range, a first active power regulation instruction to an energy storage device based on a change rate of the grid frequency and a first preset change rate comprises:
determining a first change rate deviation based on the change rate of the grid frequency and the first preset change rate, and determining a first disturbance power of a power generation unit based on the first change rate deviation and an inertia time constant of the power generation unit;
determining the first active power regulation value based on the first disturbance power and a synchronous torque coefficient of the power generation unit; and
transmitting the first active power regulation instruction comprising the first active power regulation value to the energy storage device.

3. The method according to claim 1, wherein the determining a target time point based on a prediction regulation duration and an instruction delay duration comprises:
determining, in response to a first difference of the prediction regulation duration minus the instruction delay duration being greater than zero, a sum of the first difference and a time point when the energy storage device executes the first active power regulation instruction as the target time point, wherein the time point when the energy storage device executes the first active power regulation instruction is a sum of a time point when the first active power regulation instruction is transmitted and the instruction delay duration; and
determining, in response to a second difference of the prediction regulation duration minus the instruction delay duration being less than or equal to zero, a sum of the second difference and the time point when the energy storage device executes the first active power regulation instruction as the target time point.

4. The method according to claim 1, wherein the determining a second active power regulation value based on a second preset change rate comprises:
determining a second change rate deviation based on the first preset change rate and the second preset change rate;
determining a second disturbance power of a power generation unit based on the second change rate deviation and an inertial time constant of the power generation unit; and
determining the second active power regulation value based on the second disturbance power and a synchronous torque coefficient of the power generation unit.

5. The method according to any one of claims 1 to 4, wherein before the transmitting , in response to a grid frequency falling outside a preset range, a first active power regulation instruction to an energy storage device based on a change rate of the grid frequency and a first preset change rate, the method further comprises:
determining, for each of power generation units, a target energy storage device associated with the power generation unit from a plurality of energy storage devices based on an electrical distance from the power generation unit to each of the plurality of energy storage devices,
wherein the transmitting , in response to the grid frequency falling outside a preset range, the first active power regulation instruction to the energy storage device based on the change rate of the grid frequency and the first preset change rate comprises:
transmitting, in response to the grid frequency falling outside a preset range, for each of the power generation units, the first active power regulation instruction to the target energy storage device associated with the power generation unit based on the change rate of the grid frequency and the first preset change rate of the power generation unit.

6. The method according to claim 5, wherein the transmitting, in response to the grid frequency falling outside a preset range, for each of the power generation units, the first active power regulation instruction to the target energy storage device associated with the power generation unit based on the change rate of the grid frequency and the first preset change rate of the power generation unit comprises:
determining, for each of the power generation units, the first active power regulation value corresponding to the power generation unit based on the change rate of the grid frequency and the first preset change rate of the power generation unit, wherein the first preset change rate is an expected change rate after the energy storage device executes the first active power regulation instruction;
determining, in response to the target energy storage device being associated with a plurality of power generation units, a maximum among first active power regulation values corresponding to the plurality of power generation units as a target first active power regulation value; and
transmitting a target first active power regulation instruction to the target energy storage device associated with each of the power generation units, wherein the target first active power regulation instruction comprises the target first active power regulation value.

7. The method according to claim 5, wherein before the transmitting the second active power regulation instruction to the energy storage device at the target time point, the method further comprises:
determining , in response to the target energy storage device being associated with a plurality of power generation units, a minimum among second active power regulation values corresponding to the plurality of power generation units as a target second active power regulation value; and
wherein the transmitting the second active power regulation instruction to the energy storage device at the target time point comprises:
transmitting a target second active power regulation instruction to the target energy storage device associated with each of the power generation units at the target time point, wherein the target second active power regulation instruction comprises the target second active power regulation value.

8. The method according to claim 1, wherein before the transmitting , in response to a grid frequency falling outside a preset range, a first active power regulation instruction to an energy storage device based on a change rate of the grid frequency and a first preset change rate, the method further comprises:
determining a failure risk based on a failure probability and failure economic costs of each of all nodes in a power grid, and ranking the nodes based on the failure risks to obtain a node order; and
arranging energy storage devices based on target nodes in the node order, wherein the target nodes are nodes ranked at a predetermined position in the node order, and each of electrical distances among the energy storage devices is greater than a predetermined threshold.

9. An apparatus for regulating a grid frequency, **characterized in** comprising:
a first instruction transmitting module, configured to transmit, in response to a grid frequency falling outside a preset range, a first active power regulation instruction to an energy storage device based on a change rate of the grid frequency and a first preset change rate, wherein the first active power regulation instruction comprises a first active power regulation value;
a power regulation value determination module, configured to determine a target time point based on a prediction regulation duration and an instruction delay duration, and determine a second active power regulation value based on a second preset change rate, wherein the prediction regulation duration refers to a predicted duration for the grid frequency to reach a preset frequency after the energy storage device executes the first active power regulation instruction; and
a second instruction transmitting module, configured to transmit a second active power regulation instruction to the energy storage device at the target time point, wherein the second active power regulation instruction comprises the second active power regulation value.

10. An electronic device, comprising:
at least one processor; and
a memory, in communication connection with the at least one processor, wherein,
the memory stores a computer program executable by the at least one processor, and wherein the computer program, when being executed by the at least one processor, causes the at least one processor to perform the method for regulating a grid frequency according to any one of claims 1 to 8.

11. A computer-readable storage medium, wherein the computer-readable storage medium stores computer instructions, and the computer instructions, when being executed by a processor, cause the processor to perform the method for regulating a grid frequency according to any one of claims 1 to 8.
